# EUROPÄISCHE PATENTSCHRIFT

(11) **EP 0 910 825 B1**
(45) Veröffentlichungstag und Bekanntmachung des Hinweises auf die Patenterteilung: **14.03.2007**
(21) Anmeldenummer: 97930327.8
(22) Anmeldetag: 16.06.1997
(51) Int. Cl.: G06F 9/45, G06F 9/455, G06F 9/318

(54) **VERFAHREN ZUR MIGRATION VON PROGRAMMEN MIT PORTIERBAREN UND NICHT-PORTIERBAREN PROGRAMMTEILEN**
PROCESS FOR TRANSFERRING PROGRAMS WITH TRANSFERABLE AND NON-TRANSFERABLE PROGRAM PARTS
PROCEDE DE TRANSFERT DE PROGRAMMES A ELEMENTS TRANSFERABLES ET NON TRANSFERABLES

(30) Priorität: 09.07.1996 DE 19627666
(43) Veröffentlichungstag der Anmeldung: 28.04.1999
(73) Patentinhaber: Fujitsu Siemens Computers GmbH, 80807 München (DE)
(72) Erfinder: STADEL, Manfred, D-81735 München (DE); WEBER, Christian, D-85586 Poing (DE)
(74) Vertreter: Epping - Hermann - Fischer
(86) Internationale Anmeldenummer: PCT/DE1997/001220
(87) Internationale Veröffentlichungsnummer: WO 1998/001805

(56) Entgegenhaltungen:
- WO-A-92/15961
- FR-A- 2 122 802
- ANDREWS K ET AL: "MIGRATING A CISC COMPUTER FAMILY ONTO RISC VIA OBJECT CODE TRANSLATION" ACM SIGPLAN NOTICES, Bd. 27, Nr. 9, 1.September 1992, Seiten 213-222, XP000330602

## Beschreibung

Die Erfindung betrifft ein Verfahren zur Migration von für eine Ursprungshardware vorliegendem hardwarenahem, unterprogrammunabhängigem Programmcode in einen Programmcode für eine Zielhardware mit von der Ursprungshardware abweichender Architektur, wobei der zu migrierende Programmcode aus portierbaren und nicht-portierbaren Programmteilen besteht.

Die zunehmenden Anforderungen an das Leistungsvermögen von Rechenanlagen jeder Größenordnung machen vielfach den Wechsel zu neuen Computergenerationen, z.B. zu Rechnern mit RISC-Architektur, erforderlich. Um jedoch die höhere Leistungsfähigkeit dieser Rechner ausnützen zu können, ohne dabei auf die bereits vorhandene, umfangreiche und wertvolle Softwarebasis verzichten zu müssen, ist eine Übertragung der vorhandenen Programme für Betriebssysteme, Anwendungen, Sprachcompiler etc. nötig. Die im Quellcode einer standardisierten Hochsprache vorliegenden Teile dieser Programme können meist durch einfache Recompilierung auf den hier als Zielhardware bezeichneten neuen Rechner migriert werden. Die hardwareabhängigen, z.B. in Assemblersprache geschriebenen Programmteile müssen dagegen entweder durch meist aufwendige Verfahren auf Assembler- oder Objektcodeebene in entsprechenden Programmcode für die Zielhardware transformiert werden oder auf dem neuen Rechner zur Laufzeit im Rahmen einer Emulation ausgeführt werden. Von Nachteil ist dabei, daß die Ausführungsgeschwindigkeit eines Programmes unter einer Emulation in der Regel um ein Vielfaches langsamer ausfällt als bei demselben für die Zielhardware recompilierten Programm. Da häufig ein Großteil der Komponenten eines Programmes durch Recompilierung auf die Zielhardware übertragen werden kann, ist es wünschenswert, diese portierbaren sowie die verbleibenden hardwarespezifischen Programmteile so zu einem auf der Zielhardware ablauffähigen Programmcode zu verbinden, daß nur die nicht-portierbaren Teile des Programms einer Emulation unterworfen werden müssen - Kristy Andrews et al.: "Migrating a CISC Computer Family onto RISC via Object Code Translation", ACM SIGPLAN NOTICES, 27 (1992), September, No. 9, New York, US, Seiten 213 bis 222.

Bisherige, z.B. durch *R.L.Sites, A.Chernoff, M.B.Kirk, M. P.Marks, S. G. Robinson: Binary Translation, Comm. ACM, Vol.3, Nr.2, Febr. 1993* bekannte Verfahren dafür beruhen in der Regel auf einem der folgenden zwei Ansätze:
1) Für recompilierte Teilprogramme, die im ablauffähigen Programm von nicht-portierbaren, als Code für die Ursprungshardware vorliegenden Programmteilen aus direkt aufrufbar sein sollen, werden manuell sog. Einschalungsroutinen implementiert. Diese Routinen nehmen dann zur Laufzeit des migrierten Programmcodes alle zum Wechsel des Programmflusses von recompilierten zu emulierten Programmteilen (bzw. umgekehrt) notwendigen Konvertierungen, Umschaltungen u.s.w. vor. Von Nachteil ist dabei jedoch der in der Regel erhebliche Programmieraufwand für die Implementierung der Einschalungsroutinen.
2) Die zu emulierenden, im Code der Ursprungshardware geschriebenen Programmteile werden auf der Zielhardware in speziell geschützten Speicherbereichen und die recompilierten Programmteile in entsprechend ungeschützten Bereichen abgelegt. Erfolgt dann zur Laufzeit ein Sprung aus einem recompilierten Programmteil in einen geschützt abgelegten Programmteil im Code der Ursprungshardware, so wird eine Signalisierung (in der Regel ein Hardware-Interrupt) ausgelöst und damit ein Emulator aufgerufen, der den entsprechenden angesprungenen Programmteil ausführt. Die Emulation wird dann wieder beendet, sobald im Programmverlauf eine Adresse angesprungen wird, die im ungeschützten Speicherbereich liegt und damit zum für die Zielhardware recompilierten Programmcode gehört.

Für diese Methode muß die Zielhardware (wie z.B. eine DEC-Alpha-Hardware) die Möglichkeit bieten, spezielle Speicherbereiche so zu schützen, daß der Versuch, eine darin abgespeicherte Datenfolge als Befehlsfolge zu interpretieren und auszuführen, zu einer Signalisierung führt. Dies ist jedoch bei weitem nicht bei jedem Rechner der Fall. Außerdem ist dabei von Nachteil, daß die bei jedem Wechsel zwischen einem recompilierten und einem emulierten Programmteil erfolgende Überleitung zwischen Direktausführung und Emulation (in der Regel ein Interrupt-Handling) vergleichsweise deutlich langsamer ausfällt als eine direkte Aktivierung der Emulation.

Aus der französischen Druckschrift FR-A2 122 802 (entspricht GB1324154) ist es in diesem Zusammenhang bereits bekannt, nicht portierbare Standard-Unterprogramme des Programmcodes der Ursprungshardware oder Teile davon durch einen ungültigen Befehl zu ersetzen, mit dem dann in ein dasselbe Ergebnis bewirkendes Unterprogramm der Zielhardware übergeleitet wird, wobei der letzte Befehl dieses Unterprogramms die Rückkehr in den zu migrierenden Programmcode der Ursprungshardware bewirkt.

Aufgabe der Erfindung ist es, den diesem bekannten Verfahren zugrundeliegenden Lösungsgedanken so auszubauen, daß er unter vorgegebenen Randbedingungen vorteilhafter anwendbar ist.

Die neue Lösung bezieht sich dabei auf hardwarenahen, unterprogrammunabhängigen Quellcode, wie z.B. Assembler, der neben der Einsprungstellen für Unterprogramme in der Regel eine Reihe weiterer Einsprungstellen aufweist, die daherrühren, daß man beim Programmieren in Assembler nicht gezwungen ist, ein Programm in Unterprogramme im Sinne einer höheren Programmiersprache zu gliedern. Zu den Einsprungstellen gehören zum Beispiel auch Rückkehrpunkte nach Unterprogrammsprüngen, die durch einen indirekten Sprungbefehl angesprungen werden. Alle diese Einsprungstellen werden ermittelt und gekennzeichnet. Weiterhin wird zur Kennzeichnung dieser Einsprungstellen zwar auch ein Bitmuster oder ein Befehl verwendet, das bzw. der im Befehlssatz für den Quellprogrammcode nicht vorgesehen ist; aber dieses Bitmuster wirkt auf der Zielhardware zugleich als Leerbefehl, der keine Operation verursacht. Das hat bei Assemblerprogrammen den Vorteil, daß bei den vielen möglichen Einsprungzielen im Inneren des Assemblerprogramms die im normalen Ablauf dieses Programms einfach durchlaufen werden, keinerlei spezielle Maßnahmen zum Übergeben dieser Bitmuster getroffen werden müssen. Es wird dafür lediglich ein zusätzlicher Prozessortakt benötigt.

Eine vorteilhafte Weiterbildung des erfindungsgemäßen Verfahrens ist Gegenstand des Unteranspruchs.

Gemäß der Weiterbildung der Erfindung werden in den migrierten, auf der Zielhardware ablauffähigen Programmcode auch Programmteile, z.B. spezielle Routinen aus einer Bibliothek (Library), aufgenommen, die nicht aus der Recompilierung portierbaren Programmcodes für die Ursprungshardware hervorgehen, sondern bereits in Form von Objektcode für die Zielhardware vorliegen und daher das spezielle Bitmuster nicht enthalten. Diese Programmteile werden in den ablauffähigen Programmcode übernommen, indem sie mit entsprechenden Einschalungsroutinen versehen werden, die die Verknüpfung mit den recompilierten bzw. emulierten Programmteilen herstellen. Das Einbinden solcher bereits als Code für die Zielhardware vorhandenen Programmteile ist vor allem dann von Vorteil, wenn es sich dabei um speziell für die Zielhardware optimierte, z.B. komplexe mathematische Routinen handelt, durch die entsprechende Routinen im Code der Ursprungshardware ersetzt werden. Auch für den Fall, daß im Quellcode Standard-Bibliotheksroutinen aufgerufen werden, die auf der Ursprungshardware als nicht-portierbarer Code implementiert sind, ist die Verwendung äquivalenter Routinen aus einer entsprechenden Bibliothek für die Zielhardware zweckmäßig.

Nachstehend werden Einzelheiten des erfindungsgemäßen Verfahrens an einem Beispiel unter Bezugnahme auf Zeichnungen näher erläutert.

Es zeigt
- FIG 1: schematisch die Verknüpfung von nicht-portierbaren und portierbaren Programmteilen zu einem auf der Zielhardware ablauffähigen Programmcode;
- FIG 2: ein Flußdiagramm zur Steuerung des Programmflusses bei einem nicht-lokalen Sprung aus einem recompilierten Programmteil;
- FIG 3: ein Flußdiagramm zur Steuerung des Programmflusses,bei einem nicht-lokalen Sprung aus einem emulierten Programmteil;

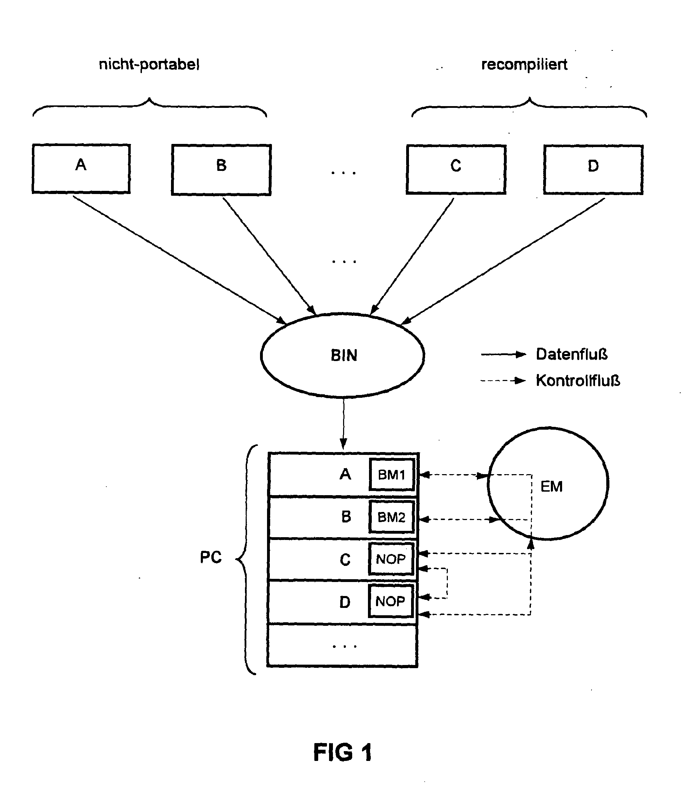

Das Grundprinzip des erfindungsgemäßen Verfahrens zur Migration ist in FIG 1 beispielhaft für ein vier Programmteile A, B, C, D umfassendes Programm dargestellt: Die beiden Programmteile A und B sind dabei nicht auf die Zielhardware portierbar, z.B. weil für sie kein Quellcode in einer portierbaren Hochsprache vorliegt. Die beiden anderen Programmteile C und D dagegen sind portierbar und werden daher gemäß der Erfindung für die Zielhardware übersetzt (recompiliert). Bei der Recompilierung werden alle potentiellen Einsprungpunkte für Sprünge in die portierbaren Programmteile ermittelt, und im übersetzten Code wird an diesen Stellen jeweils ein spezielles Bitmuster NOP eingefügt. Als Befehl interpretiert stellt dieses Bitmuster NOP auf der Zielhardware einen Leerbefehl, auf der Ursprungshardware jedoch keine gültige Anweisung dar. Alle vier Programmteile A, B, C und D werden bei der Migration des Programms für die Ursprungshardware durch eine Montage-Routine (Binder) BIN zu einem auf der Zielhardware ablauffähigen Programmcode PC verknüpft, dem auch ein Emulator EM für die Emulation der beiden im Code der Ursprungshardware vorliegenden Programmteile A und B auf der Zielhardware beigefügt wird. Wechselt zur Laufzeit des migrierten Programmcodes PC der Kontrollfluß von einem recompilierten Programmteil C oder D zu einem direkt von der Ursprungshardware übernommenen Programmteil A oder B, so liegt an der angesprungenen Stelle nicht das spezielle, im Code der Ursprungshardware ja gar nicht erlaubte Bitmuster NOP vor, sondern ein anderes Bitmuster BM1 bzw. BM2. Dementsprechend wird nach der Überprüfung des am Sprungziel gefundenen Bitmusters der Emulator EM aufgerufen, um den angesprungenen, nicht-portierten Programmteil A bzw. B auszuführen. Die Emulation wird solange fortgeführt, bis eine Verzweigung des Kontrollflusses zu einem Sprungziel erfolgt, an dem das spezielle Bitmuster NOP vorliegt. Bei dem angesprungenen Programmteil handelt es sich folglich um recompilierten Programmcode C bzw. D, der auf der Zielhardware direkt ohne Emulation ausgeführt wird.

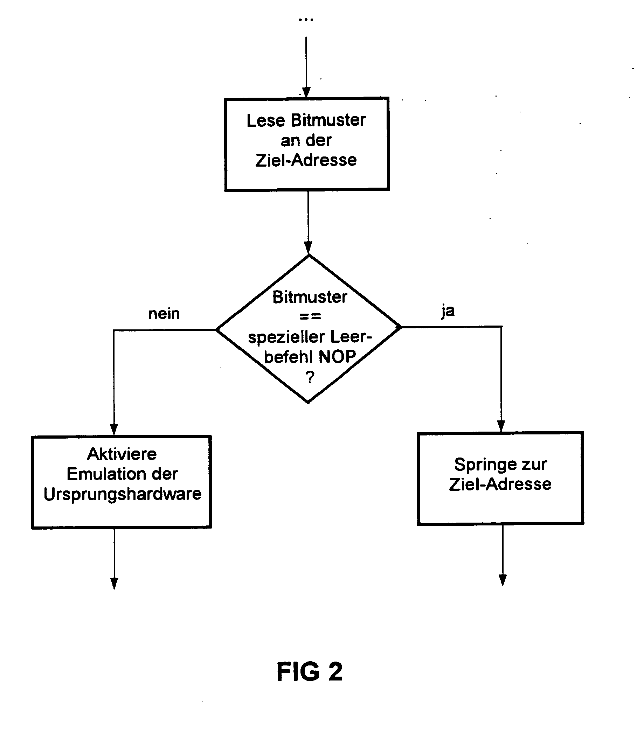

In FIG 2 ist anhand eines Flußdiagramms der Verlauf des Kontrollflusses bei der Ausführung des migrierten Programmcodes PC auf der Zielhardware für den Fall eines nicht-lokalen Sprunges aus einem recompilierten Programmteil C bzw. D dargestellt. Das an der Zieladresse vorliegende Bitmuster wird gelesen und auf Übereinstimmung mit dem speziellen Bitmuster NOP überprüft. Sind die beiden Bitmuster identisch, so erfolgt der Sprung zum angegebenen Sprungziel, das dann in einem recompilierten Programmteil C bzw. D liegt. Anderenfalls befindet sich das Sprungziel in einem von der Ursprungshardware übernommenen Programmteil A bzw. B und folglich wird die Emulation aktiviert.

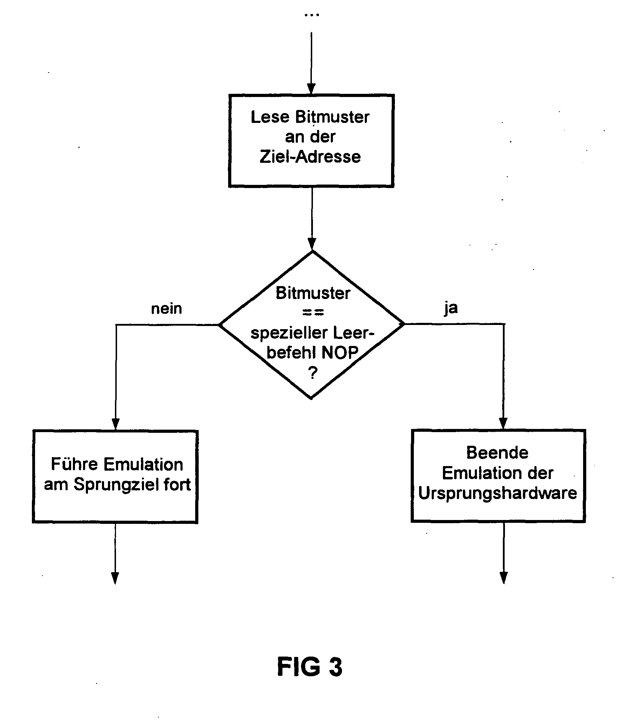

Der entgegengesetzte Fall für den Verlauf des Kontrollflusses bei einem nicht-lokalen Sprung aus einem emulierten Programmteil A bzw. B ist in FIG 3 dargestellt. Liegt am Sprungziel das spezielle Bitmuster NOP vor, so handelt es sich beim angesprungenen Programmteil um recompilierten Code C bzw. D und die Emulation kann daher beendet werden. Anderenfalls muß der angesprungene Programmteil ebenfalls emuliert werden.

## Patentansprüche

1. Verfahren zur Migration von für eine Ursprungshardware vorliegendem hardwarenahem und unterprogrammunabhängigem Programmcode in einen Programmcode (PC) für eine Zielhardware mit von der Ursprungshardware abweichender Architektur, wobei der zu migrierende Programmcode aus portierbaren und nicht-portierbaren Programmteilen (A, B bzw. C, D) besteht, und bei dem
- die portierbaren Programmteile (C, D) in Code für die Zielhardware übersetzt werden; und dabei
- alle möglichen Einsprungpunkte, an denen diese portierbaren Programmteile (C, D) von anderen Programmteilen (A, B, C, D) aus angesprungen werden können, ermittelt werden;
- an allen derartigen Einsprungpunkten in diese portierbaren Programmteile (C, D) ein spezielles Bitmuster (NOP) generiert wird, das einerseits einen Leerbefehl der Zielhardware darstellt, andererseits aber keine gültige Operation für die Ursprungshardware ergibt;
- an allen potentiellen Aussprungpunkten von nicht-lokalen, aus einem dieser portierbaren Programmteile (C, D) herausführenden Verzweigungen Programmcode erzeugt wird, der zur Laufzeit auf der Zielhardware das Sprungziel des entsprechenden Aussprunges daraufhin überprüft, ob dort das spezielle Bitmuster (NOP) vorliegt, und falls dies nicht der Fall ist, einen Emulator (EM) aktiviert, der den folglich als nicht-portierbarer Code für die Ursprungshardware vorliegenden, angesprungenen Programmteil (A, B) auf der Zielhardware emuliert; wobei
- bei der Emulation ebenfalls bei allen potentiell nicht-lokalen Aussprüngen aus einem emulierten Programmteil geprüft wird, ob an der Zieladresse das spezielle Bitmuster (NOP) vorliegt, und falls dies der Fall ist, die Emulation beendet wird.

2. Verfahren nach Anspruch 1,
**dadurch gekennzeichnet,**
**daß** in den auf der Zielhardware ablauffähigen Programmcode (PC) auch in Form von Objektcode für die Zielhardware vorhandene Programmteile, die nicht aus der Übersetzung portierbaren Programmcodes für die Ursprungshardware hervorgehen und deren Befehlsfolgen daher das spezielle Bitmuster (NOP) nicht enthalten, übernommen werden, indem diese Programmteile gegebenenfalls mit Einschalungsroutinen versehen werden, die die Verknüpfung zu den recompilierten bzw. emulierten Programmteilen (A, B, C, D) herstellen.

## Claims

1. A method for the migration of hardware-proximate and subprogram-independent program code present for a source hardware into a program code (PC) for a destination hardware having an architecture deviating from the source hardware, whereby the program code to be migrated is composed of portable and non-portable program parts (A, B or, respectively, C, D), and whereby
- the portable program parts (C, D) are translated into code for the destination hardware; and, thereby
- all possible entry points at which said portable program parts (C, D) can be branched to proceeding from other program parts (A, B, C, D) are determined;
- a specific bit pattern (NOP) is generated in these portable program parts (C, D) at all such entry points, said specific bit pattern representing a dummy command of the destination hardware without yielding a valid operation for the source hardware;
- program code that, at run-time on the destination hardware, checks the branch destination of the corresponding exit to determine if the specific bit pattern (NOP) is present is generated at all potential exit points of non-local branchings leading out from one of these portable program parts (C, D), and, when this is not the case, an emulator (EM) is activated that emulates the program part (A, B) on the destination hardware that has been branched to and that is consequently present as non-portable code for the source hardware; whereby
- a check is carried out to determine if the specific bit pattern (NOP) is present at the destination address in the emulation given all potentially non-local exits from an emulated program part and, if this is the case, the emulation is ended.

2. The method according to claim 1, **characterized in that** program parts are transferred that are present in the program code (PC) executable on the destination hardware as object code for the destination hardware and that do not proceed from the translation of portable program codes for the source hardware and whose command sequences therefore do not contain the specific bit pattern (NOP), and wherein these program parts are provided with shelling routines that produce linkage to recompiled or, respectively, emulated program parts (A, B, C, D).

## Revendications

1. Procédé pour la migration d'un code programme proche d'un équipement, existant dans un équipement d'origine et indépendant d'un sous-programme, vers un code programme (PC) pour un équipement de destination ayant une architecture divergeant de l'équipement d'origine, le code programme destiné à migrer consistant en des éléments de programme (A, B ou C, D) portables et non portables, et dans lequel
- les éléments de programme portables (C, D) sont traduits en code pour l'équipement de destination ; et
- tous les points de saut d'entrée possibles où ces éléments de programme portables (C, D) peuvent être initiés à partir d'autres éléments de programme (A, B, C, D) sont déterminés ;
- à tous lesdits points de saut d'entrée dans ces éléments de programme portables (C, D), il est généré un modèle de bit spécial (NOP) qui constitue d'une part une instruction inactive de l'équipement de destination mais ne donne d'autre part pas d'opération valable pour l'équipement d'origine ;
- à tous les points de saut de sortie potentiels de bifurcations non locales menant hors d'un de ces éléments de programme portables (C, D), il est généré un code programme qui, au moment de l'exécution sur l'équipement de destination, vérifie la destination de saut du saut de sortie correspondant si le modèle de bit spécial (NOP) y est présent et, si ce n'est pas le cas, active un émulateur (EM) qui émule l'élément de programme (A, B) initié présent par conséquent sous forme de code non portable pour l'équipement d'origine sur l'équipement de destination ; tandis que
- lors de l'émulation, il est également vérifié pour tous les sauts de sortie potentiellement non locaux hors d'un élément de programme émulé si le modèle de bit spécial (NOP) est présent à l'adresse de destination et, si c'est le cas, l'émulation se termine.

2. Procédé selon la revendication 1,
**caractérisé en ce que**,
dans le code programme (PC) exécutable sur l' équipement de destination sont intégrés des éléments de programme disponibles aussi sous forme de code objet pour l'équipement de destination qui ne ressortent pas de la traduction du code programme portable pour l'équipement d'origine et dont les séquences d'instructions ne contiennent donc pas le modèle de bit spécial (NOP), du fait que ces éléments de programme sont équipés le cas échéant de routines d'encapsulation qui établissent la connexion avec les éléments de programme recompilés ou émulés (A, B, C, D).
